# EUROPÄISCHE PATENTSCHRIFT

(11) **EP 4 677 307 B1**
(45) Veröffentlichungstag und Bekanntmachung des Hinweises auf die Patenterteilung: **29.04.2026**
(21) Anmeldenummer: 24829387.0
(22) Anmeldetag: 11.12.2024
(51) Int. Cl.: G01C 21/30, G01C 21/36

(54) **VERFAHREN ZUM ERMITTELN EINES ZUVERLÄSSIGKEITSWERTES FÜR EINE EIGENPOSITIONSERMITTLUNG EINES FAHRZEUGS UND FAHRZEUG**
METHOD FOR DETERMINING A RELIABILITY VALUE FOR AN INTRINSIC POSITION DETERMINATION OF A VEHICLE AND VEHICLE
PROCÉDÉ DE DÉTERMINATION D'UNE VALEUR DE FIABILITÉ POUR UNE DÉTERMINATION DE POSITION PROPRE D'UN VÉHICULE ET VÉHICULE

(30) Priorität: 07.03.2024 DE 102024000172
(43) Veröffentlichungstag der Anmeldung: 14.01.2026
(73) Patentinhaber: Mercedes-Benz Group AG, 70372 Stuttgart (DE)
(72) Erfinder: RIES, Florian, 70599 Stuttgart (DE)
(74) Vertreter: Novagraaf Group
(86) Internationale Anmeldenummer: PCT/EP2024/085589
(87) Internationale Veröffentlichungsnummer: WO 2025/185851

(56) Entgegenhaltungen:
- DE-A1- 102019 001 450
- DE-A1- 102019 003 473
- US-A1- 2014 343 842

## Beschreibung

Die Erfindung betrifft ein Verfahren zum Ermitteln eines Zuverlässigkeitswertes für eine Eigenpositionsermittlung eines Fahrzeugs sowie ein Fahrzeug zur Durchführung des Verfahrens.

Aus der Veröffentlichung "Visual Place Recognition via Semantic and Geometric Descriptor for Automated Valet Parking", Proceedings of the 2021 IEEE International Conference on Robotics and Biomimetics December 27-31, 2021, Sanya, China, pages 1142-1147; Jingrui Yu and Jianbo Su ist ein Deskriptorenvergleich von an unterschiedlichen Orten aufgenommenen Bildern und eine Ermittlung von zugehörigen Ähnlichkeitswerten bekannt.

Aus der Offenlegungsschrift DE 10 2018 210 765 A1 ist ein Verfahren bekannt, bei dem anhand erfasster Umgebungsdaten Landmarken detektiert werden, wobei anhand der in Kartendaten verzeichneten Landmarken eine Eigenposition bestimmt wird, die zur Bestimmung eines Start- und Endpunktes sowie einer Fahrtrajektorienplanung für einen automatisierten Fahrbetrieb zugrunde gelegt wird.

Aus der US 2014 / 343842 A1 ist ein Verfahren zur Fahrzeuglokalisierung unter Verwendung von Straßenmarkierungen bekannt. Eine Datenbank mit Vorlagen für die Klassifizierung von Straßenmarkierungen enthält Vorlagen für Trainingsbilder, die aus verschiedenen Navigationsumgebungen stammen. Ecken können für die Straßenmarkierung anhand eines entzerrten oder verbesserten Bildes berechnet werden. Für die Ecken können Positionen festgelegt und als Teil einer Vorlage gespeichert werden. In ähnlicher Weise kann ein Laufzeitbild auch entzerrt und verbessert werden. Ecken für das Laufzeitbild können berechnet und mit Ecken von Vorlagen aus der Vorlagendatenbank abgeglichen werden, mittels einer erkannten Übereinstimmung kann ein Standort oder eine Pose eines Fahrzeugs bestimmt werden.

Eine hohe Zuverlässigkeit der ermittelten Eigenposition ist dabei Voraussetzung für einen sicheren automatisierten Fahrbetrieb.

Aufgabe der Erfindung ist daher ein Verfahren und eine Vorrichtung bereitzustellen, mittels welchen eine Zuverlässigkeit einer Geolokalisierung erhöht wird.

Die Aufgabe wird durch ein Verfahren zum Ermitteln eines Zuverlässigkeitswertes für eine Eigenposition eines Fahrzeugs mit den Merkmalen des Anspruchs 1 sowie einem Fahrzeug zur Durchführung des Verfahrens gemäß Anspruch 10 gelöst. Die abhängigen Ansprüche definieren bevorzugte und vorteilhafte Ausführungsformen der vorliegenden Erfindung.

Das erfindungsgemäße Verfahren umfasst folgende Schritte:
- Ermittlung eines Deskriptors_Umfeld_t1 aus Merkmalen der Umgebung zum Zeitpunkt t1 und Ermittlung eines Deskriptors_Karte_t1 aus Kartendaten zum Zeitpunkt t1 an der ermittelten Eigenposition,
- Ermittlung eines Ähnlichkeitswertes A1 zwischen dem Deskriptor_Umfeld_t1 und dem Deskriptor_Karte_t1 zum Zeitpunkt t1 und
- Ermittlung eines Ähnlichkeitswertes A2 zwischen dem Deskriptor_Umfeld_t1 und einem vor dem Zeitpunkt t1 zum Zeitpunkt t0 aus Merkmalen der Umgebung bestimmten und gespeicherten Deskriptor_Umfeld _t0 (mit t0<t1), wobei sofern der Ähnlichkeitswert A1 über einem vorgegebenen Schwellenwert S1 liegt und der Ähnlichkeitswert A2 unterhalb einem vorgegebenen Schwellenwert S2 liegt,
- Erhöhung eines zum Zeitpunkt t0 gültigen Zuverlässigkeitswertes für die ermittelte Eigenposition,
wobei eine Steuerung zur Aktivierung eines automatisierten Fahrbetriebs aktiv geschaltet wird, solange der Zuverlässigkeitswert über einem vorgegebenen Mindestwert liegt.

Hochautomatisierte Fahrsysteme sind normalerweise nur für einen bestimmten Anwendungsbereich zugelassen (Operational Design Domain - ODD), und das Fahrzeug muss erkennen können, ob diese Bedingung erfüllt ist; z.B. darf ein Autobahnchauffeur nur auf einer geeigneten Autobahn und ein Parkplatzpilot nur auf einem geeigneten Parkplatz zur Aktivierung angeboten werden. ODD Grenzen lassen sich gut geografisch abstecken, sie werden daher oft in den hochgenauen Karten verzeichnet, welche hochautomatisierte Fahrfunktionen ohnehin verwenden, um die Umgebungserfassung zu unterstützen. Eine Bestimmung eine Eigenposition mittels einem Satellitensystem (GNSS), mittels einer Erfassung von Umgebungsmerkmalen oder einem sonstigen aus dem Stand der Technik bekannte Verfahren ist jedoch einer gewissen Ungenauigkeit unterworfen, wobei ein möglicher Fehler nie so groß werden darf, dass die reale Fahrzeugposition aufgrund des möglichen Fehlers der Eigenpositionsermittlung außerhalb der ODD-Grenzen liegt, d.h. dass sich beispielsweise das Fahrzeug auf einer für einen automatisierten Fahrbetrieb nicht zugelassenen, parallelen Straße befinden kann. Mit anderen Worten muss der Fehler der ermittelten Eigenposition so klein sein, dass die reale Fahrzeugposition nicht außerhalb der ODD-Grenzen liegen kann. Um etwaige Fehler der durch GNSS oder einem sonstigen Verfahren ermittelten Position auszuschließen wird ein aus mittels Kamera, Radar oder sonstigen Sensoren ermittelten Merkmalen der Umgebung bestimmter Deskriptor_Umfeld mit einem in einer Karte an der durch GNSS oder sonstige Verfahren ermittelten Position hinterlegten Deskriptor_Karte verglichen. Über die Ähnlichkeit der beiden, mittels aus dem Stand der Technik bekannten Verfahren ermittelten Deskriptoren kann nun bewertet werden, ob die aktuelle Position in der Nähe der Position in der Karte liegt oder nicht. Dennoch können einzelne Deskriptoren ähnlich sein, obwohl sie auf unterschiedlichen Orten basieren, wenn diese Orte ähnlich aussehen, weil Straßen und ihre umliegende Infrastruktur oft ähnlich aufgebaut sind. Um diesen Fehler auszuschließen, vergleicht das erfindungsgemäße Verfahren bei einem vorzugsweise fahrenden Fahrzeug, d.h. an unterschiedlichen Orten zum Zeitpunkt t1 und t0 den aktuellen Deskriptor_Umfeld_t1 mit dem Deskriptor_Karte_t1 zu dem Zeitpunkt t1 und den aktuellen Deskriptor_Umfeld_t1 zu dem Zeitpunkt t1 mit einem zuvor zu dem Zeitpunkt t0 abgespeicherten Deskriptor_Umfeld_t0. Ist die erste Bedingung erfüllt, dass der aktuelle Deskriptor_Umfeld_t1 ausreichend ähnlich dem Deskriptor_Karte_t1 ist, und gleichzeitig die zweite Bedingung erfüllt ist, dass der aktuelle Deskriptor_Umfeld_t1 ausreichend unähnlich dem Deskriptor_Umfeld_t0 ist, dann ist gewährleistet, dass nicht an verschiedenen Orten von ähnlichem Aussehen eine Übereinstimmung der Umgebung mit Kartendaten bestimmt und damit eine Eigenposition fehlerhaft ermittelt und als vermeintlich zuverlässig für einen automatisierten Fahrbetrieb verwendet wird.

Hierzu wird der Ähnlichkeitsfaktor A1 zwischen Deskriptor_Umfeld_t1 und dem Deskriptor_Karte_t1 und ein Ähnlichkeitsfaktor A2 zwischen Deskriptor_Umfeld_t1 und dem Deskriptor_Umfeld_t0 ermittelt. Ausreichende Ähnlichkeit als erste Bedingung ist gegeben, sofern A1größer als ein vorgegebener Schwellenwert S1 ist mit A1>S1, ausreichende Unähnlichkeit als zweite Bedingung ist gegeben, sofern A2 kleiner als der Schwellenwert S2 ist mit A2<S2 ist. Üblicher Weise wird S2<S1 gewählt. Für den Fall, dass S2≤S1 ist, d.h. es kann auch S2=S1 sein, giltA1>S1=S2 und A2≤S2=S1, so dass A1 und A2 nicht gleich groß sein können, um die erste und zweite Bedingung zu erfüllen. Sind die Bedingungen erfüllt, dann wird ein zum Zeitpunkt t0 gültiger Zuverlässigkeitswert erhöht, da eine falsch ermittelte Eigenposition aufgrund ähnlichen Aussehens unterschiedlicher Orte ausgeschlossen werden kann. Der Zuverlässigkeitswert wird zu einem auf t1 folgenden Zeitpunkt erhöht bzw. geändert, d.h. nachdem der Vergleich mit den Ähnlichkeitswerten A1 und A2 erfolgt ist.

Für den Fall eines Systemstarts, d.h. bei einer erstmaligen Ermittlung des Deskriptors_Umfeld _t1 nach einem System- bzw. Fahrzeugstart, ist noch kein vor dem Zeitpunkt t1 bestimmter und gespeicherter Deskriptor_Umfeld _t0 vorhanden. In diesem auch Cold-Start genannten Fall wird in Ermangelung eines Wertes für den vor einem Zeitpunkt vor t1 vorhandenen Deskriptor_Umfeld _t0 auf die Ermittlung des Ähnlichkeitswertes A2 verzichtet und alleinig eine Veränderung des Zuverlässigkeitswertes anhand dem Ähnlichkeitswert A1 vorgenommen, d.h. sofern der Ähnlichkeitswert A1 über einem vorgegebenen Schwellenwert S1 liegt wird ein initial vorgegebener Zuverlässigkeitswert erhöht. Alternativ kann ein Deskriptor_Umfeld_t0 bei jedem Neustart mit derart künstlichen Werten initialisiert werden, dass jeder theoretisch ermittelbare Deskriptors_Umfeld_t1 sicher unähnlich ist und somit alle Verfahrensschritte durchführbar sind.

In weiterer Ausgestaltung des Verfahrens werden die Verfahrensschritte fortlaufend zu auf t1 folgenden Zeitpunkten tn durchgeführt. Mit anderen Worten wird das Verfahren kontinuierlich durchgeführt, solange sich das Fahrzeug bewegt und sich damit zu unterschiedlichen Zeitpunkten an unterschiedlichen Orten befindet. Hierbei werden entsprechend dem vorab beschriebenen Verfahren ein Deskriptor_Umfeld_tn mit einem Deskriptor_Karte_tn sowie der Deskriptor_Umfeld_tn mit einem Deskriptor_Umfeld_tn-₁ verglichen. Zu jedem Zeitpunkt tn wird dann der Zuverlässigkeitswert entweder hochgezählt, reduziert oder ggfs. auf einen Initialisierungswert gesetzt. In vorteilhafter Weise ist die Aussage des über einen längeren Zeitraum ermittelten Zuverlässigkeitswerts deutlich verlässlicher, zudem wird bei einer einmaligen Nichterfüllung der Bedingungen der Zuverlässigkeitswert nicht sofort, sondern erst bei mehrmaliger Wiederholung so weit reduziert, dass ein automatisierter Fahrbetrieb abgebrochen werden muss.

In weiterer Ausgestaltung des Verfahrens wird, sofern A1 nicht über dem Schwellenwert S1 liegt der Zuverlässigkeitswert reduziert. Ist die Bedingung, dass Deskriptor_Umfeld und der Deskriptor_Karte zu einem gleichen Zeitpunkt ausreichend ähnlich zueinander sind nicht erfüllt, dann wird der zuvor bestimmte Zuverlässigkeitswert reduziert, d.h. entweder um einen vorgegebenen Wert reduziert oder auf einen Initialisierungswert zurückgesetzt. In vorteilhafter Weise wird durch die Reduzierung des Zuverlässigkeitswertes eine falsche Bestimmung der Eigenposition vermieden.

In einer Weiterbildung des Verfahrens erfolgt, sofern A2 nicht kleiner ist als der Schwellenwert S2 keine Veränderung des Zuverlässigkeitswertes. Ist die zweite Bedingung nicht erfüllt, d.h. ist der Deskriptor_Umfeld zum einem Erfassungszeitpunkt dem des vorhergehenden Erfassungszeitpunktes zu ähnlich, dann hat sich die Umgebung nicht in ausreichendem Maße geändert, um den Zuverlässigkeitswert erhöhen zu können. In weiterer Ausgestaltung des Verfahrens wird eine Steuerung zur Aktivierung eines automatisierten Fahrbetriebs aktiv geschaltet, solange der Zuverlässigkeitswert über einem vorgegebenen Mindestwert liegt. Mit der Aktivierung der Steuerung, wird die Funktionalität des Automatisierten Fahrens freigeschaltet, d.h. das Fahrzeug fährt nach Freigabe durch einen Nutzer so lange alle Voraussetzungen erfüllt sind, insbesondere solange sich das Fahrzeug auf einer für das automatisierte Fahren vorgesehenen Strecke befindet, d.h. bis Ende-ODD. In vorteilhafter Weise kann bei einem Zuverlässigkeitswert oberhalb dem Mindestwert davon ausgegangen werden, dass die ermittelte Eigenposition korrekt ist und automatisiert gefahren werden kann.

In einer weiteren bevorzugten Ausführungsform wird der zu verschiedenen Zeitpunkten ermittelte Deskriptor_Umfeld mittels MachineLearning aus Daten, d.h. Merkmalen der Umgebung von Radar, Lidar und oder Kamera erstellt. Die Erstellung des Deskriptors_Umfeld auf Basis mehrerer Datenquellen der Umfelderfassung ermöglicht eine weiträumige Erfassung der Umgebungsmerkmale.

In einer weitergebildeten Ausführungsform wird der zu verschiedenen Zeitpunkten ermittelte Deskriptor_Umfeld aus semantischen und geometrischen Informationen des Umfelds ermittelt. Semantischen Informationen wie Straßenschildern, Werbetafeln oder Eigennamen lassen sich mit geometrischen Merkmalen der Umgebung zu einem das Umfeld mit hoher Genauigkeit beschreibenden Deskriptor_Umfeld kombinieren.

In Ausgestaltung des Verfahrens wird zu einer Position in einer Karte der zu verschiedenen Zeitpunkten ermittelte Deskriptor_Karte aus in einer Datenbank (POI) hinterlegten semantischen oder graphischen Informationen vorzugsweise mittels MachineLearning ermittelt. Die Datenbank ist im Fahrzeug oder auf einem mit dem Fahrzeug in Verbindung stehenden Server hinterlegt. Eine Berücksichtigung von semantischen und graphischen Informationen ermöglicht eine umfassende Beschreibung einer Position anhand der Kartendaten.

In eine vorteilhaften Weiterbildung des Verfahrens werden Zeitintervalle zur Bestimmung der Deskriptor_Umfeld und Deskriptor_Karte abhängig von einer Fahrgeschwindigkeit des Fahrzeugs angepasst. Je niedriger die Fahrgeschwindigkeit ist, desto größer sind die Zeitintervalle zur Bestimmung der Deskriptoren zu wählen, damit eine Ortsveränderung für eine Änderung des Umfelds ausreichend groß ist, um eine Anpassung der Zuverlässigkeitswerte vornehmen zu können.

Das erfindungsgemäße Fahrzeug ist eingerichtet für einen automatisierten Fahrbetrieb mit einer Recheneinrichtung zu Durchführung des Verfahrens nach einem der vorangegangenen Ansprüche, wobei die Recheneinheit für das vorzugsweise fahrende Fahrzeug
- einen Deskriptor_Umfeld _t1 aus Merkmalen der Umgebung zum Zeitpunkt t1 und einen Deskriptor_Karte_t1 aus Kartendaten zum Zeitpunkt t1 an einer ermittelten Eigenposition ermittelt,
- einen Ähnlichkeitswertes A1 zwischen dem Deskriptor_Umfeld_t1 und dem Deskriptor_Karte_t1 zum Zeitpunkt t1 ermittelt und
- einen Ähnlichkeitswert A2 zwischen dem Deskriptor_Umfeld_t1 und einem vor dem Zeitpunkt t1 zum Zeitpunkt t0 aus den Merkmalen der Umgebung bestimmten und gespeicherten Deskriptor_Umfeld _t0 ermittelt, wobei
   sofern der Ähnlichkeitswert A1 über einem vorgegeben Schwellenwert S1 liegt und der Ähnlichkeitswert A2 unterhalb einem vorgegebenen Schwellenwert S2 liegt
- einen zum Zeitpunkt t0 gültigen Zuverlässigkeitswert für die ermittelte Eigenposition erhöht.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

### Dabei zeigen:

- Fig. 1: Ablaufdiagramm des erfindungsgemäßen Verfahrens und
- Fig. 2: Fahrzeug zur Durchführung des Verfahrens aus Fig. 1.

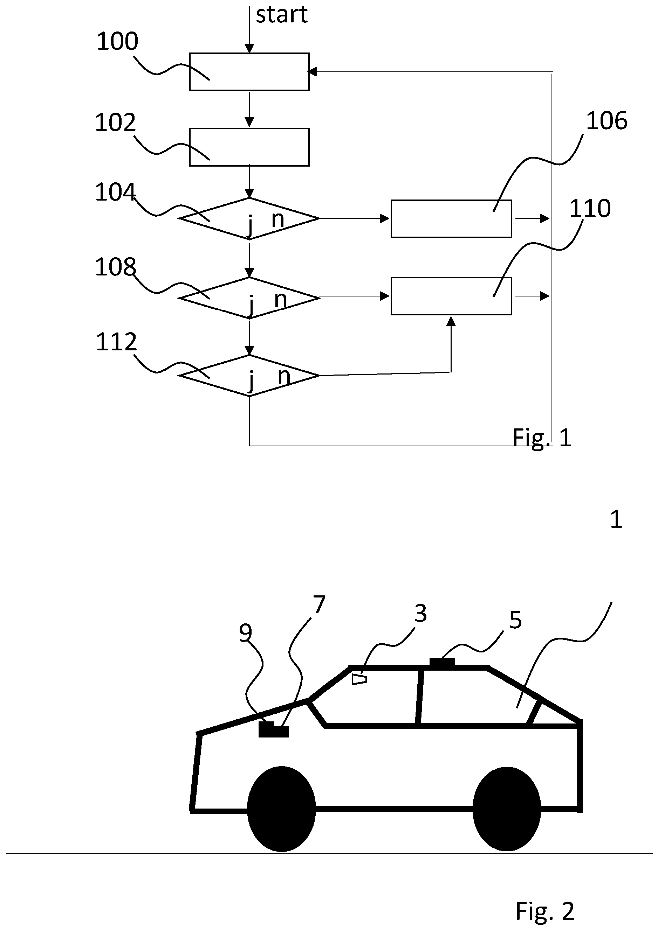

Gemäß Fig.1 wird in dem Schritt 100 ein Deskriptor_Umfeld _t1 aus Merkmalen einer Umgebung eines Fahrzeugs bestimmt, wobei die Merkmale mittels Sensoren wie zum Beispiel einer Kamera, Lidar und/oder Radar zum Zeitpunkt t1 ermittelt werden. Im folgenden Schritt 102 wird mit einem geeigneten Verfahren, beispielsweise einem Satellitenpositionsermittlungsverfahren wie GPS eine Eigenposition bestimmt und zu der Eigenposition aus Kartendaten ein Deskriptor_Karte_t1 zum Zeitpunkt t1 erfasst.

Zur Bestimmung eines Ähnlichkeitswertes A1 erfolgt im Schritt 104 ein Vergleich zwischen dem Deskriptor_Umfeld _t1 und dem Deskriptor_Karte_t1. Die Bestimmung von Ähnlichkeitswerten zwischen Deskriptoren erfolgt mittels aus dem Stand der Technik bekannten Algorithmen wie beispielsweise Levenshtein Distance, Histogrammen, euklidische Distanz etc., siehe auch zitierten Stand der Technik.

Der ermittelte Ähnlichkeitswert A1 wird mit einem vorgegebenen Schwellenwert S1 verglichen, sofern der Ähnlichkeitswert A1 den Schwellenwert nicht überschreitet, d.h. diese erste Bedingung nicht erfüllt ist, wird davon ausgegangen, dass die Deskriptoren nicht ausreichend ähnlich sind und der in einem vorherigen Durchlauf des Verfahrens ermittelte Zuverlässigkeitswert wird im Schritt S110 reduziert und das Verfahren im Schritt 100 neu begonnen.

Liegt der Ähnlichkeitswert A1 über dem Schwellenwert S1 A1>S1, dann ist eine ausreichende Ähnlichkeit der Deskriptoren bestätigt und das Verfahren setzt sich im Schritt S108 fort.

Im Schritt S108 wird geprüft, ob bereits in einem vorherigen Durchlauf zu t1 ein Deskriptor_Umfeld gespeichert wurde. Sollte noch kein Deskriptor_Umfeld gespeichert worden sein, dann wird in diesem nur für ein Startdurchlauf relevanten Zweig des Verfahrens der aktuelle Deskriptor_Umfeld gespeichert, ein initialer Zuverlässigkeitswert im Schritt S110 erhöht und das Verfahren im Schritt S100 neu gestartet.

Ist bereits ein Deskriptor_Umfeld_t0 mit t0<t1 gespeichert, dann wird im Schritt S112 ein Ähnlichkeitswert A2 zwischen dem Deskriptor_Umfeld_t1 und einem vor dem Zeitpunkt t1 zum Zeitpunkt t0 bestimmten und gespeicherten Deskriptor_Umfeld _t0 bestimmt und eine zweite Bedingung geprüft, nämlich ob der Ähnlichkeitswert kleiner oder zumindest gleich einem Schwellenwert S2 ist. Mit anderen Worten wird an dieser Stelle geprüft, ob der Deskriptor_Umfeld_t1 und der Deskriptor_Umfeld _t0 ausreichend ungleich sind. Sind diese nicht ausreichend ungleich, dann kann keine zuverlässige Eigenposition bestimmt werden, da an mehreren Geo-Positionen die ausreichende Ähnlichkeit zwischen den Deskriptor_Umfeld _t1 und Deskriptor_Karte_t1 feststellbar ist und damit offen bleibt, welche die richtige ist. Für diesen Fall wird das Verfahren im Schritt S100 neu gestartet. Sind Deskriptor_Umfeld_t0 und Deskriptor_Umfeld_t1 ausreichend ungleich, dann wird im Schritt S110 der zum Zeitpunkt t0 gespeicherte Zuverlässigkeitswert erhöht und das Verfahren im Schritt S100 neu gestartet.

Das Verfahren wird bei einem fahrenden Fahrzeug kontinuierlich in Schleifen, d.h. in aufeinanderfolgenden Rechenzyklen durchlaufen und der Zuverlässigkeitswert regelmäßig aktualisiert. Ein Steuergerät liest den Zuverlässigkeitswert ein aktiviert einen automatisierten Fahrbetrieb nur, sofern der Zuverlässigkeitswert über einem vorgegebenen Mindestwert liegt.

In Fig. 2 ist das erfindungsgemäße für einen automatisierten Fahrbetrieb eingerichtete Fahrzeug 1 dargestellt. Das Fahrzeug umfasst eine Sensoreinrichtung 3 zur Erfassung der Umgebung des Fahrzeugs, die beispielsweise als Kamera ausgeführt ist, sowie eine Standorterkennungseinrichtung 5, die über Satellitensignale Geodaten eine Eigenposition ermittelt. Für die Steuerung eines automatisierten Fahrbetriebs empfängt ein Steuergerät 7 neben den Geodaten Signale zu Umgebungsdaten von der Kamera und/oder nicht gezeigten Lidar- und Radarsensoren. An der ermittelten mit GPS bestimmten Eigenposition zum Zeitpunkt t1 ermittelt eine vorzugsweise in dem Steuergerät 7 angeordnete Recheneinheit 9 einen Deskriptor_Umfeld _t1 aus den Merkmalen der Umgebung und einen Deskriptor_Karte_t1 aus Kartendaten.

Die Recheneinheit 9 bestimmt weiter einen Ähnlichkeitswert A2 zwischen dem Deskriptor_Umfeld_t1 und einem vor dem Zeitpunkt t1 zum Zeitpunkt t0 bestimmten und gespeicherten Deskriptor_Umfeld _t0 mit t0<t1. Sofern als erste Bedingung der Ähnlichkeitswert A1 über einem vorgegebenen ersten Schwellenwert S1 mit A1>S1 liegt und als zweite Bedingung der Ähnlichkeitswert A2 unterhalb oder zumindest gleich einem vorgegebenen Schwellenwert S2 mit A2≤S2 liegt, wird ein Zuverlässigkeitswert für die ermittelte Eigenposition erhöht. Ist die erste Bedingung nicht erfüllt, wird ein aktueller Zuverlässigkeitswert erniedrigt, ist die erste aber die zweite Bedingung nicht erfüllt bleibt der Zuverlässigkeitswert unverändert. Das Steuergerät 7 gibt einen automatisierten Fahrbetrieb des Fahrzeugs 1 innerhalb der ODD_Grenzen nur frei, solange der Zuverlässigkeitswert über einem vorgegebenen Mindestwert liegt.

## Patentansprüche

1. Verfahren zum Ermitteln eines Zuverlässigkeitswertes für eine ermittelte Eigenposition eines Fahrzeugs mit den folgenden Schritten:
- Ermittlung eines Deskriptors Deskriptor_Umfeld_t1 (S100) aus mit Sensoren ermittelten Merkmalen der Umgebung zum Zeitpunkt t1 und Ermittlung eines Deskriptors Deskriptor_Karte_t1 (S102) aus Kartendaten zum Zeitpunkt t1 an der ermittelten Eigenposition,
- Ermittlung eines Ähnlichkeitswertes A1 (104) zwischen dem Deskriptor_Umfeld_t1 und dem Deskriptor_Karte_t1 zum Zeitpunkt t1 und
- Ermittlung eines Ähnlichkeitswertes A2 zwischen dem Deskriptor_Umfeld_t1 und einem vor dem Zeitpunkt t1 zum Zeitpunkt t0 aus den Merkmalen der Umgebung bestimmten und gespeicherten Deskriptor_Umfeld _t0, wobei sofern der Ähnlichkeitswert A1 über einem vorgegebenen Schwellenwert S1 liegt und der Ähnlichkeitswert A2 unterhalb einem vorgegebenen Schwellenwert S2 liegt,
- Erhöhung eines zum Zeitpunkt t0 gültigen Zuverlässigkeitswertes für die ermittelte Eigenposition,wobei
eine Steuerung zur Aktivierung eines automatisierten Fahrbetriebs aktiv geschaltet wird, solange der Zuverlässigkeitswert über einem vorgegebenen Mindestwert liegt.

2. Verfahren nach Anspruch 1,
**dadurch gekennzeichnet, dass**
die Verfahrensschritte fortlaufend zu auf t1 folgende Zeitpunkte durchgeführt werden.

3. Verfahren nach Anspruch 1 oder 2,
**dadurch gekennzeichnet, dass**
sofern A1 nicht über dem Schwellenwert S1 liegt, wird der Zuverlässigkeitswert reduziert oder neu initialisiert.

4. Verfahren nach einem den vorhergehenden Ansprüchen,
**dadurch gekennzeichnet, dass**
sofern A2 nicht kleiner ist als der Schwellenwert S2 ist, erfolgt keine Veränderung des Zuverlässigkeitswertes.

5. Verfahren nach einem den vorhergehenden Ansprüchen,
**dadurch gekennzeichnet, dass**
der Deskriptor_Umfeld mittels MachineLearning aus Daten von Radar, Lidar und oder Kamera erstellt wird.

6. Verfahren nach einem den vorhergehenden Ansprüchen,
**dadurch gekennzeichnet, dass**
der Deskriptor_Umfeld aus semantischen und geometrischen Informationen des Umfelds ermittelt wird.

7. Verfahren nach einem den vorhergehenden Ansprüchen,
**dadurch gekennzeichnet, dass**
der Deskriptor_Karte aus zu einer Position in einer Karte, einer Datenbank hinterlegten semantischen oder graphischen Informationen ermittelt wird.

8. Verfahren nach einem den vorhergehenden Ansprüchen,
**dadurch gekennzeichnet, dass**
Zeitintervalle zur Bestimmung der Deskriptor_Umfeld und Deskriptor_Karte abhängig von einer Fahrgeschwindigkeit des Fahrzeugs angepasst werden.

9. Fahrzeug eingerichtet für einen automatisierten Fahrbetrieb mit einer Kamera zur
Erfassung von mit Sensoren ermittelten Merkmalen der Umgebung und einer Recheneinrichtung (9) zur Durchführung des Verfahrens nach einem der vorangegangenen Ansprüchen, wobei die Recheneinheit (9) für das Fahrzeug
- einen Deskriptor Deskriptor_Umfeld _t1 aus Merkmalen der Umgebung zum Zeitpunkt t1 und einen Deskriptor Deskriptor_Karte_t1 aus Kartendaten zum Zeitpunkt t1 an einer ermittelten Eigenposition ermittelt,
- einen Ähnlichkeitswert A1 zwischen dem Deskriptor_Umfeld_t1 und dem Deskriptor_Karte_t1 zum Zeitpunkt t1 ermittelt und
- einen Ähnlichkeitswert A2 zwischen dem Deskriptor_Umfeld_t1 und einem vor dem Zeitpunkt t1 zum Zeitpunkt t0 aus den Merkmalen der Umgebung bestimmten und gespeicherten Deskriptor_Umfeld _t0 ermittelt, wobei sofern der Ähnlichkeitswert A1 über einem vorgegebenen Schwellenwert S1 liegt und der Ähnlichkeitswert A2 unterhalb einem vorgegebenen Schwellenwert S2 liegt,
- einen zum Zeitpunkt t0 gültigen Zuverlässigkeitswert für die ermittelte Eigenposition erhöht, wobei
eine Steuerung zur Aktivierung oder Deaktivierung eines automatisierten Fahrbetriebs aktiv geschaltet wird, solange der Zuverlässigkeitswert über einem vorgegebenen Mindestwert liegt.

## Claims

1. Method for ascertaining a reliability value for an ascertained ego position of a vehicle, which method comprises the steps of:
- ascertaining a descriptor Descriptor_Environment_t1 (S100) from features of the environment, which features are ascertained by means of sensors, at a time t1 and ascertaining a descriptor Descriptor_Map_t1 (S102) from map data at a time t1 in the ascertained ego position,
- ascertaining a similarity value A1 (104) between the Descriptor_Environment_t1 and the Descriptor_Map_t1 at the time t1 and
- ascertaining a similarity value A2 between the Descriptor_Environment_t1 and a Descriptor_Environment_t0 determined and stored from the features of the environment before the time t1 at a time t0, wherein if the similarity value A1 is above a specified threshold value S1 and the similarity value A2 is below a specified threshold value S2,
- increasing a reliability value valid at the time t0 for the ascertained ego position, wherein
control for activating automated driving is switched to active if the reliability value is above a specified minimum value.

2. Method according to claim 1,
**characterized in that**
the method steps are carried out continuously at times following t1.

3. Method according to claim 1 or claim 2,
**characterized in that**
if A1 is not above the threshold value S1, the reliability value is reduced or reinitialized.

4. Method according to any of the preceding claims,
**characterized in that**
if A2 is not below the threshold value S2, the reliability value is not changed.

5. Method according to any of the preceding claims,
**characterized in that**
the Descriptor_Environment is generated by means of machine learning from data from a radar, lidar and/or camera.

6. Method according to any of the preceding claims,
**characterized in that**
the Descriptor_Environment is ascertained from semantic and geometric information from the environment.

7. Method according to any of the preceding claims,
**characterized in that**
the Descriptor_Map is ascertained from semantic or graphical information, stored in a database, with respect to a position on a map.

8. Method according to any of the preceding claims,
**characterized in that**
time intervals for determining the Descriptor_Environment and Descriptor_Map are adjusted depending on a speed of the vehicle.

9. Vehicle designed for automated driving, having a camera for capturing features of the environment ascertained by means of sensors and having a computing unit (9) for carrying out the method according to any of the preceding claims, wherein the computing unit (9) for the vehicle ascertains
- a descriptor Descriptor_Enviroment_t1 from features of the environment at the time t1 and a descriptor Descriptor_Map_t1 from map data at the time t1 in an ascertained ego position,
- a similarity value A1 between the Descriptor_Environment_t1 and the Descriptor_Map_t1 at the time t1 and
- a similarity value A2 between the Descriptor_Environment_t1 and a Descriptor_Environment_t0 determined and stored from the features of the environment before the time t1 at the time t0, wherein
if the similarity value A1 is above a specified threshold value S1 and the similarity value A2 is below a specified threshold value S2, - a reliability value valid at the time t0 for the ascertained ego position increases, wherein
control for activating or deactivating automated driving is switched to active if the reliability value is above a predetermined minimum value.

## Revendications

1. Procédé pour la détermination d'une valeur de fiabilité pour une position propre déterminée d'un véhicule, comportant les étapes suivantes :
- détermination d'un descripteur Descripteur_Environnement_t1 (S100) à partir de caractéristiques de l'environnement déterminées par des capteurs au moment t1 et détermination d'un descripteur Descripteur_Carte_t1 (S102) à partir de données cartographiques au moment t1 à la position propre déterminée,
- détermination d'une valeur de similitude A1 (104) entre le Descripteur_Environnement_t1 et le Descripteur_Carte_t1 au moment t1, et
- détermination d'une valeur de similitude A2 entre le Descripteur_Environnement_t1 et un Descripteur_Environnement_t0 établi et mémorisé avant le moment t1 au moment t0 à partir des caractéristiques de l'environnement, dans lequel dans la mesure où la valeur de similitude A1 est supérieure à une valeur seuil S1 prédéterminée et la valeur de similitude A2 est inférieure à une valeur seuil S2 prédéterminée,
- augmentation d'une valeur de fiabilité valable au moment t0 pour la position propre déterminée, dans lequel
une commande pour l'activation d'un fonctionnement de conduite automatisé est activée tant que la valeur de fiabilité est supérieure à une valeur minimale prédéfinie.

2. Procédé selon la revendication 1,
**caractérisé en ce que**
les étapes de procédé sont exécutées en continu à des moments t1 suivants.

3. Procédé selon la revendication 1 ou 2,
**caractérisé en ce que**
dans la mesure où A1 n'est pas supérieure à la valeur seuil S1, la valeur de fiabilité est réduite ou réinitialisée.

4. Procédé selon l'une des revendications précédentes,
**caractérisé en ce que**
dans la mesure où A2 n'est pas inférieure à la valeur seuil S2, aucune modification de la valeur de fiabilité n'est effectuée.

5. Procédé selon l'une des revendications précédentes,
**caractérisé en ce que**
le Descripteur_Environnement est créé au moyen d'un apprentissage machine à partir de données provenant de radars, lidars et/ou caméras.

6. Procédé selon l'une des revendications précédentes,
**caractérisé en ce que**
le Descripteur_Environnement est déterminé à partir d'informations sémantiques et géométriques de l'environnement.

7. Procédé selon l'une des revendications précédentes,
**caractérisé en ce que**
le Descripteur_Carte est déterminé à partir d'informations sémantiques ou graphiques enregistrées pour une position dans une carte, une base de données.

8. Procédé selon l'une des revendications précédentes,
**caractérisé en ce que**
des intervalles de temps pour l'établissement du Descripteur_Environnement et du Descripteur_Carte peuvent être adaptés en fonction d'une vitesse de déplacement du véhicule.

9. Véhicule configuré pour un fonctionnement de conduite automatisé comportant une caméra pour la saisie de caractéristiques de l'environnement déterminées par des capteurs et une unité de calcul (9) pour l'exécution du procédé selon l'une des revendications précédentes, dans lequel l'unité de calcul (9) pour le véhicule
- détermine un descripteur Descripteur_Environnement_t1 à partir de caractéristiques de l'environnement au moment t1 et détermine un descripteur Descripteur_Carte_t1 à partir de données cartographiques au moment t1 à une position propre déterminée,
- détermine une valeur de similitude A1 entre le Descripteur_Environnement_t1 et le Descripteur_Carte_t1 au moment t1, et
- détermine une valeur de similitude A2 entre le Descripteur_Environnement_t1 et un Descripteur_Environnement_t0 établi et mémorisé avant le moment t1 au moment t0 à partir des caractéristiques de l'environnement, dans lequel
dans la mesure où la valeur de similitude A1 est supérieure à une valeur seuil S1 prédéfinie, et
la valeur de similitude A2 est inférieure à une valeur seuil S2 prédéterminée,
- augmente une valeur de fiabilité valable au moment t0 pour la position propre déterminée, dans lequel
une commande pour l'activation ou la désactivation d'un fonctionnement de conduite automatisé est activée tant que la valeur de fiabilité est supérieure à une valeur minimale prédéfinie.
